# FASCICULE DE BREVET EUROPEEN

(11) **EP 4 347 441 B1**
(45) Date de publication et mention de la délivrance du brevet: **20.05.2026**
(21) Numéro de dépôt: 22730561.2
(22) Date de dépôt: 31.05.2022
(51) Int. Cl.: B65G 1/04, B66B 9/10

(54) **SYSTEME DE STOCKAGE AUTOMATISE D'ARTICLES**
AUTOMATISIERTES ARTIKELAUFBEWAHRUNGSSYSTEM
AUTOMATED ARTICLE STORAGE SYSTEM

(30) Priorité: 31.05.2021 FR 2105722
(43) Date de publication de la demande: 10.04.2024
(73) Titulaire: Fives Xcella, 56260 Lamor-Plage (FR); FIVES SYLEPS, 56312 Lorient Cedex (FR)
(72) Inventeur: REY, Julien, 56100 Lorient (FR); JAMES, Aurélien, 56100 Lorient (FR); LOUIS REGIS, Lénaïck, 44140 Le Bignon (FR)
(74) Mandataire: Cabinet Camus Lebkiri
(86) Numéro de dépôt international: PCT/EP2022/064718
(87) Numéro de publication internationale: WO 2022/253812

(56) Documents cités:
- DE-A1- 102012 019 356
- DE-A1- 102013 114 275
- JP-A- H05 346 068
- US-A1- 2016 152 446

## Description

### Domaine technique de l'invention

L'invention concerne le domaine de l'intralogistique et porte sur un système de stockage automatisé d'articles, par exemple un entrepôt. Dans ce système, des articles sont transportés par des chariots de transport automatiquement guidés vers des positions de stockage déterminées pour être déposés pour une certaine durée, puis retrouvés par le système en vue de leur transport à l'extérieur, par exemple pour une livraison à un client.

### Etat de la technique

Dans ce domaine, on connait des systèmes de stockage utilisant des chariots automatiquement guidés pour le déplacement dans le rayonnage afin de poser ou prendre un article.

Pour permettre un déplacement vertical des chariots automatiquement guidés, il est connu de prévoir des pignons sur les côtés opposés des chariots, qui engrènent avec des crémaillères dentées ou des chaines fixées à des montants opposés du rayonnage. Une fois que le chariot est positionné entre les crémaillères ou les chaines, les moteurs du chariot engagent les pignons dans les crémaillères et les font tourner ce qui permet de monter ou descendre le chariot d'un niveau de stockage à l'autre.

L'inconvénient de ce type de systèmes est que chaque chariot doit être muni de 4 pignons motorisés, de moyens d'entrainement des pignons ainsi que de moyens d'entrée /sortie des pignons. De ce fait, les chariots sont de construction complexe. Comme de tel systèmes de stockage comprennent un nombre important de chariots, le coût des chariots peut rendre le système trop cher.

De plus, parmi les inconvénients de ces systèmes, des difficultés d'engrènement qui peuvent résulter du fait qu'il faut aligner 4 pignons avec des crémaillères/chaines.

Un autre inconvénient réside dans le fait que le rayonnage nécessite souvent d'avoir des montants reliant chaque case de stockage. Le rayonnage nécessite ainsi un nombre important de montants avec les moyens de grimpe associés, ce qui augmente aussi les coûts du rayonnage.

Nous connaissons également des systèmes de stockage ayant un ascenseur simple avec une base mobile dans un puits, tirée par exemple par des câbles, pour s'arrêter à chaque niveau de stockage. L'inconvénient de ces systèmes est qu'il est nécessaire de multiplier le nombre d'ascenseurs dans le rayonnage pour avoir une cadence de déplacement de chariots correcte. De ce fait, il y a une perte d'espace de stockage et une augmentation des coûts de l'installation.

De plus, DE102013114275A1 divulgue un système de stockage automatisé d'articles selon le préambule de la revendication 1. L'objectif de l'invention est donc de proposer un système de stockage automatisé permettant de résoudre les problèmes des solutions décrites ci-dessus.

### Résumé de l'invention

A cet effet, l'invention concerne un système de stockage automatisé d'articles tel que revendiqué dans la revendication 1, le système comprenant :
- une pluralité de chariots automatiquement guidés aptes chacun à transporter un article, et
- un rayonnage comprenant une pluralité de niveaux de stockage superposés comprenant chacun une allée dans laquelle peuvent circuler des chariots automatiquement guidés et une colonne de déplacement vertical reliant les niveaux de stockage et permettant un déplacement de chariots automatiquement guidés le long de cette colonne entre un niveau d'entrée/sortie d'articles et un des niveaux de stockage, ou entre deux niveaux de stockage,
Ladite colonne de déplacement vertical comprenant :
- des premiers moyens d'élévation mobiles configurés pour déplacer verticalement un premier chariot automatiquement guidé, et
- des deuxièmes moyens d'élévation mobiles adjacents aux premiers moyens d'élévation, configurés pour déplacer verticalement un deuxième chariot automatiquement guidé, indépendamment du déplacement du premier chariot automatiquement guidé.

Les premiers moyens d'élévation et les deuxièmes moyens d'élévation permettent chacun de déplacer verticalement un chariot automatiquement guidé. De ce fait, un chariot n'a pas besoin de pignons et de moyens d'entrainement puisque les moyens d'élévation mobiles de la colonne assurent le déplacement. En conséquence, les chariots sont de construction simple et moins chère.

Même si nous parlons de premiers moyens et de deuxièmes moyens d'élévation, la colonne peut évidemment avoir aussi des troisièmes moyens d'élévation, des quatrièmes moyens d'élévation, ...etc.

En outre, le fait que le déplacement vertical des chariots automatiquement guidés se fait dans une zone limitée formant la colonne, le rayonnage est standard et ne nécessite pas d'avoir un nombre important de montants munis de moyens de grimpe. De ce fait, le rayonnage est également de structure simple et peu chère.

Par ailleurs, le fait que plusieurs chariots peuvent être déplacés simultanément dans la même colonne de déplacement vertical permet, d'augmenter la cadence de déplacement des chariots et le système ne nécessite pas d'avoir un nombre important de zones réservées au déplacement vertical. En effet, une colonne selon l'invention peut permettre d'avoir la même cadence que plusieurs puits de déplacement vertical dans les solutions de l'état de la technique.

Dans cette description, nous entendons au sens de l'invention :
- par « moyens d'élévation », une pluralité de moyens d'élévation, par exemple 2, 3 ou 4 moyens. Pour faciliter la compréhension du lecteur, le terme "moyen" est parfois remplacé par "ensemble de moyens".
- Par « chariot automatiquement guidé », tout véhicule (ou navette, ou robot ou AGV) guidé automatiquement au sol, par exemple pour passer d'un point à l'autre d'un entrepôt, mais également dans le rayonnage de sorte qu'il puisse transporter un objet stocké ou à stocker. Un robot automatiquement guidé est communément désigné comme AMR (pour Automated Mobile Robot en anglais).
- par « colonne », une zone limitée, réservée au déplacement vertical des chariots automatiquement guidés. Par exemple, dans certains modes de réalisation, la colonne de déplacement vertical correspond à un puits reliant des niveaux de stockage du rayonnage. Dans certains exemples de réalisation, la colonne de déplacement vertical est agencée entre deux portions parallèles du rayonnage.

Dans les deux exemples ci-dessus, les dimensions de la colonne peuvent être proches. Les dimensions des colonnes peuvent par exemple être choisies de sorte à permettre le passage d'un seul chariot automatiquement guidé (ou AMR) à la fois. Dans ce cas, deux chariots automatiquement guidés successifs l'un monté par les premiers moyens et l'autre monté par les deuxièmes moyens, peuvent se suivre mais ne peuvent se croiser.

Avantageusement, les premiers moyens d'élévation et deuxièmes moyens d'élévation peuvent être agencés dans la colonne de sorte que chaque premier moyen d'élévation soit adjacent d'un deuxième moyen d'élévation respectif.

L'agencement des premiers moyens et des deuxièmes moyens d'élévation dans la colonne en plaçant chaque premier moyen adjacent d'un deuxième moyen d'élévation respectif, permet de réduire l'espace nécessaire à un déplacement vertical de deux chariots automatiquement guidés successifs. En effet, l'agencement des premiers et deuxièmes moyens dans la colonne permet de déplacer les chariots successifs l'un au-dessus de l'autre et suivant des axes de déplacement vertical très proches.

En conséquence, il devient possible d'agencer dans le même puits plusieurs moyens (c'est-à-dire ensembles de moyens) pour permettre de déplacer simultanément plusieurs chariots tout en gardant les dimensions de la colonne de déplacement vertical réduites.

Selon l'invention :
- un chariot automatiquement guidé comprend des premiers moyens d'accrochage, de préférence latéraux ; et
- les premiers moyens d'élévation et/ou les deuxièmes moyens d'élévation comprennent des deuxièmes moyens d'accrochage de préférence latéraux configurés pour coopérer avec les premiers moyens d'accrochage de manière à réaliser l'accrochage pour l'élévation et le défaire ensuite pour libérer le chariot, par exemple dans une allée ou au sol.

En réalisant l'accrochage entre le chariot automatiquement guidé (AMR) et le(s) moyen(s) d'élévation uniquement pour la monté ou la descente et ensuite libérer le chariot pour qu'il se déplace dans une allée d'un niveau de stockage ou au sol, la colonne devient disponible de suite pour déplacer un nouveau chariot par les premiers moyens ou les deuxièmes moyens. En outre, les chariots automatiquement guidés déplacés par les premiers moyens de déplacement vertical ne bloquent pas le déplacement des chariots déplacés par les deuxièmes moyens de déplacement vertical et inversement. Par exemple, lorsque les premiers moyens déplacent un chariot jusqu'au deuxième niveau de stockage, celui-ci est libéré pour se déplacer dans l'allée de ce niveau et ne gênera pas le déplacement d'un autre chariot par les deuxièmes moyens jusqu'au niveaux supérieurs. En conséquence, le fait de réaliser l'accrochage uniquement pour le déplacement dans la colonne, la capacité de déplacement est importante sans que les chariots ne se bloquent puisque chaque chariot déplacé jusqu'à un niveau de stockage libère le passage en quittant la colonne. Cela permet également beaucoup de flexibilité dans la gestion des déplacements des chariots dans la colonne.

Selon des modes de réalisation, les premiers moyens d'accrochages appartenant aux chariots automatiquement guidés sont rétractables.

Avantageusement, les deuxièmes moyens d'accrochage sont agencés pour recevoir les premiers moyens d'accrochage lorsqu'ils sont dans une position allongée.

Avantageusement, les premiers moyens d'élévation peuvent comprendre une pluralité de premiers moyens agencés latéralement, au moins deux premiers moyens sont en regard l'un de l'autre.

Les deuxièmes moyens d'élévation peuvent comprendre une pluralité de deuxièmes moyens agencés latéralement, au moins deux deuxièmes moyens sont en regard l'un de l'autre.

En agençant les premiers et/ou les deuxièmes moyens d'élévation latéralement dans la colonne de déplacement vertical, l'espace entre les premiers moyens d'élévation et/ou les deuxièmes moyens d'élévation est réservée aux chariots automatiquement guidés. Un chariot se présente entre les premiers moyens et/ou les deuxièmes moyens d'élévation active les premiers moyens d'accrochage pour qu'ils coopèrent avec les deuxièmes moyens d'accrochage pour déplacer le chariot verticalement.

Avantageusement, l'espace entre le premier et le deuxième côté de la colonne de déplacement vertical est exclusivement réservé au déplacement des chariots automatiquement guidés. En réservant l'espace entre le premier côté et le deuxième côté

Avantageusement, les premiers moyens d'élévation et/ou les deuxièmes moyens d'élévation peuvent comprendre des chaînes, des câbles ou des courroies, portant les deuxièmes moyens d'accrochage.

Ces moyens d'élévation présentent une robustesse et une fiabilité à l'usage. Les courroies présentent en plus l'avantage de permettre des déplacements rapides, avec un bruit réduit et de nécessiter peu d'entretien. Les chaines présentent l'avantage de faciliter l'ajout de moyens d'accrochage.

Selon des modes de réalisation, les deuxièmes moyens d'accrochage sont solidaires des courroies, chaines ou câbles. Avantageusement, les premiers moyens d'élévation et/ou les deuxièmes moyens d'élévation comprenant des courroies :
- les premiers moyens d'accrochage peuvent comprendre des broches, mobiles chacune entre une position reculée et une position avancée,
- les deuxièmes moyens d'accrochage peuvent comprendre des pièces d'accrochage solidaires des courroies et agencées chacune pour recevoir une broche mobile, lorsque celle-ci est en position avancée.

De tels moyens présentent l'avantage d'être simples, faciles à mettre en œuvre et peu encombrants. Ils permettent aussi d'obtenir une bonne stabilité du chariot lors des déplacements dans la colonne et en conséquence permettent au chariot de se déplacer rapidement sans risquer d'avoir un accident.

Dans certains modes de réalisation, un premier moyen d'élévation et/ou un deuxième moyen d'élévation peut comprendre :
- une courroie sans fin agencée entre deux poulies, et
- une pluralité de deuxièmes moyens d'accrochage solidaires de la courroie.

Dans ce cas, il est possible de déplacer dans la même direction (montée ou descente) plusieurs chariots successifs avec un même ensemble de moyens d'élévation (par exemple les premiers moyens) et donc augmenter davantage la cadence de déplacement des chariots.

Optionnellement, les moyens d'accrochage sont distancés d'un pas correspondant à un multiple d'une distance verticale entre deux niveaux de stockage.

Dans certains modes de réalisation, un premier moyen d'élévation et/ou un deuxième moyen d'élévation peut comprendre deux portions de courroie reliées par une pièce d'accrochage comprenant un logement. Ceci présente l'avantage d'avoir des moyens de déplacement vertical à faible coût tout en gardant une bonne fiabilité. La pièce d'accrochage étant fabriqué séparément de la courroie, elle présente une bonne solidité et une bonne résistance au poids lors de la montée et descente de chariots. En outre, comme ladite pièce ne passe pas au niveau des poulies, ce type de moyen d'élévation présente une bonne résistance à l'usure, et réduit donc les coûts d'exploitation.

Avantageusement, la pièce d'accrochage peut être agencée entre deux montants de guidage le long desquels elle peut coulisser en montée et en descente. Ceci procure une meilleure stabilité lors du déplacement vertical du chariot.

Dans certains modes de réalisation, le nombre de premiers moyens d'élévation et/ou le nombre des deuxièmes moyens d'élévation peut être entre 2 et 4. Dans d'autres modes de réalisation, le nombre peut être supérieur à 4.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente un premier exemple de rayonnage selon l'invention ;
[Fig.2] la figure 2 est une vue de dessus d'une colonne de déplacement vertical selon un premier exemple de réalisation ;
[Fig.3] la figure 3 montre un deuxième exemple de rayonnage selon l'invention ;
[Fig.4] la figure 4 montre une vue de dessus d'une colonne de déplacement vertical selon un deuxième exemple de réalisation ;
[Fig.5] la figure 5 montre une vue isométrique partielle d'une colonne de déplacement vertical ;
[Fig.6] la figure 6 montre une vue partielle de côté de la colonne de déplacement vertical de la figure 5 ;
[Fig.7] la figure 7 montre un zoom illustrant un exemple d'accrochage entre un chariot et un moyen d'élévation ;
[Fig.8] la figure 8 montre un zoom montrant l'accrochage entre un chariot et moyen d'élévation selon une variante de réalisation.

Dans la suite de la description, des éléments présentant une structure identique ou des fonctions analogues seront désignés par les mêmes références.

### Description détaillée

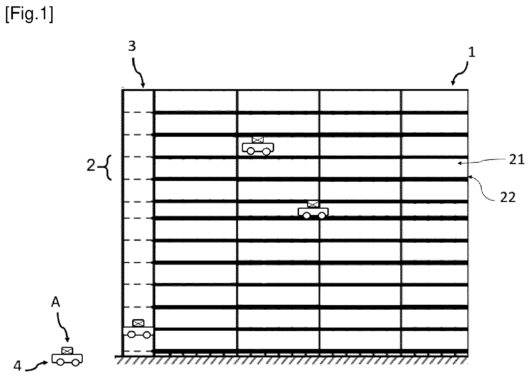

La figure 1 représente schématiquement un premier exemple simplifié d'un système de stockage selon l'invention. Le système de stockage dans cet exemple comprend un stock formé par un rayonnage 1 tridimensionnel et une pluralité de chariots automatiquement guidés 4. Le rayonnage 1 comprend une pluralité de niveaux de stockage 2, chaque niveau de stockage 2 peut comprendre des emplacements pour stocker des articles, par exemple sous forme d'étagères 21. Chaque niveau de stockage 2 peut comprendre une allée 22 dans laquelle peut circuler un chariot 4 pour déposer ou prendre un article A. Dans des exemples de réalisation non illustrés, un niveau de stockage 2 peut comprendre une pluralité d'allées pour la circulation de chariots automatiquement guidés 4.

Le rayonnage 1 peut en outre comprendre une ou plusieurs colonnes 3 (sous forme de puits) reliant la pluralité de niveaux de stockage 2 et permettant le déplacement du chariot automatiquement guidé 4 d'un niveau 2 à l'autre, ou entre un niveau de stockage 2 et un niveau d'entrée/sortie. Par exemple, dans la figure 1 le niveau d'entrée/sortie peut être le niveau le plus bas (au niveau du sol), mais il peut aussi être le niveau le plus haut (le toit). Dans des exemples non illustrés, le niveau le plus bas peut être une entrée (ou sortie) et le niveau le plus haut une sortie (ou entrée).

Les chariots automatiquement guidés 4 selon l'invention, sont de construction simplifiée : ils ne sont pas pourvus de moyens motorisés (par exemple des pignons) pour leur permettre de monter par eux même dans le puits 3. Pour permettre le déplacement vertical des chariots 4, la colonne 3 comprend des moyens d'élévations motorisés permettant de déplacer un chariot 4 le long du puits.

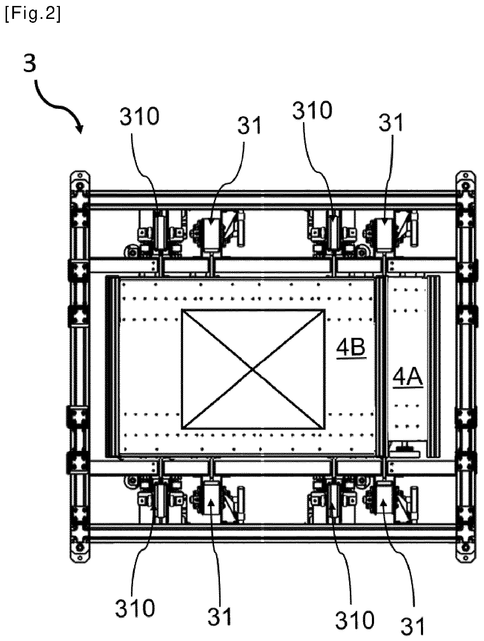

La figure 2 illustre une vue de dessus d'un exemple de colonne de déplacement vertical 3 sous forme d'un puits. La colonne 3 peut être associée à l'exemple de réalisation de la figure 1. Dans cet exemple, le puits 3 comprend un premier jeu de moyens d'élévation 31, par exemple 4 courroies sans fin. Ces premiers moyens d'élévation sont configurés pour déplacer verticalement un premier chariot 4A. La colonne 3 comprend un deuxième jeu de moyens d'élévation 310, par exemple des courroies configurées pour faire un mouvement alternatif montée/descente. Les deuxièmes moyens 310 sont configurés pour déplacer verticalement un deuxième chariot 4B dans la même colonne.

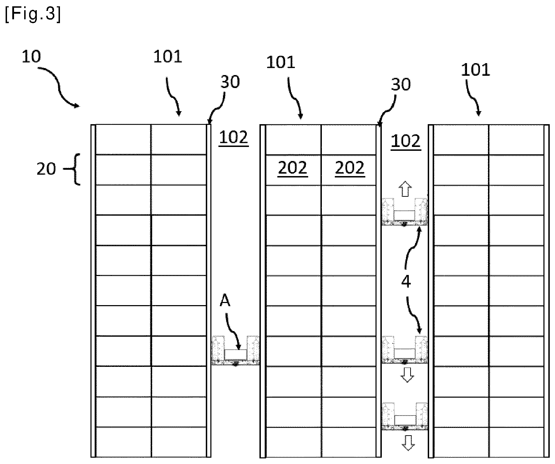

La figure 3 montre une vue de face d'un système de stockage selon un deuxième exemple de réalisation. Dans cet exemple, le stock comprend une variante de rayonnage 10 composé de paires de rangées de stockage 101 séparées par des allées 102. Les chariots 4 automatiquement guidés peuvent circuler horizontalement dans l'allée 102 pour déposer des articles A à stocker dans une étagère 202 d'un niveau de stockage 20.

Le chariot 4 peut également prendre un article A stocké pour le déplacer à l'intérieur ou à l'extérieur du rayonnage 10. Par exemple, un chariot 4 peut déplacer un article A d'un niveau de stockage 20 à l'autre, ou d'un niveau de stockage 20 dans lequel il est stocké pour l'évacuer à l'extérieur, par exemple, dans le cadre d'une livraison à un client ayant passé une commande. Cela s'applique également aux exemples décrits précédemment.

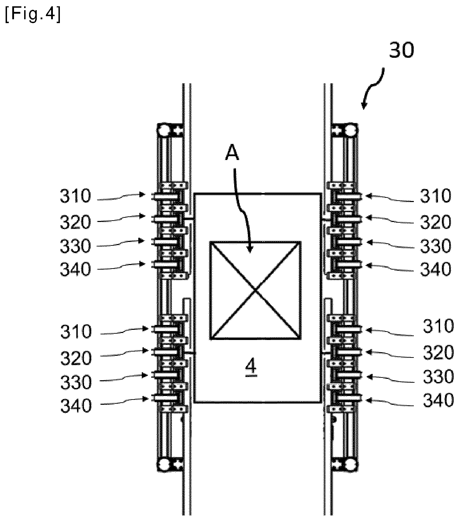

La figure 4 montre un exemple de colonne 30 de déplacement vertical pouvant être utilisé avec le système de la figure 3. Dans cet exemple, des premiers moyens d'élévation 310, des deuxièmes moyens d'élévation 320, des troisièmes moyens d'élévation 330 et des quatrièmes moyens d'élévation 340, peuvent transporter verticalement des chariots 4 automatiquement guidé respectifs. Par souci de simplification seul un chariot 4 déplacé par les moyens 320 est illustré. Les quatre ensembles de moyens de déplacement vertical 310 à 340 peuvent transporter en même temps, chacun un chariot automatiquement guidé ou plus, cependant, cela n'est pas obligatoire.

Selon cet exemple de réalisation, chaque premier moyen 310 est adjacent d'un deuxième moyen 320, d'un troisième moyen 330 et d'un quatrième moyen 340.

Dans cet exemple, chacun des ensembles de premiers moyens 310, des deuxièmes moyens 320, des troisièmes moyens 330 et des quatrièmes moyens 340, peut comprendre quatre courroies.

Dans des exemples non illustrés, la colonne de la figure 4 peut également être utilisée avec le système selon la figure 1.

Dans d'autres exemples non illustrés, la colonne de la figure 2 peut également être utilisée avec le système selon la figure 3.

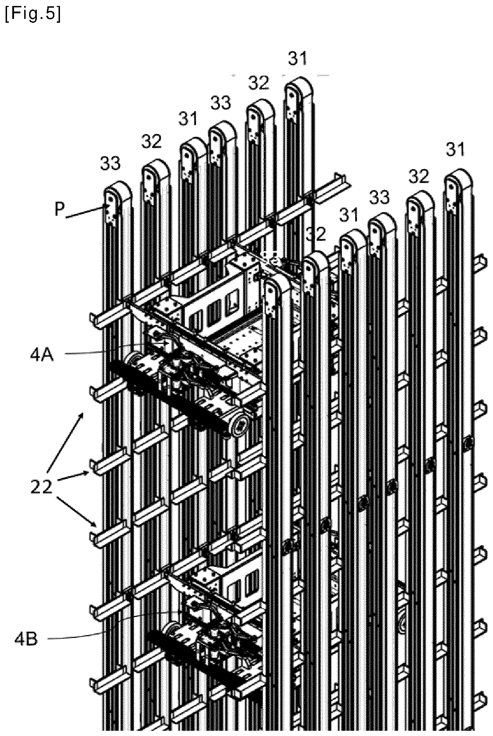

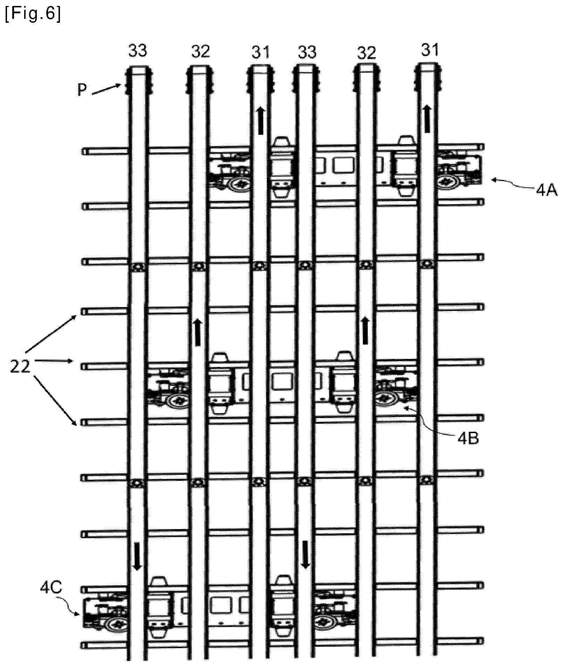

Les figures 5 et 6 montrent des vues schématiques partielles d'une colonne de déplacement vertical, respectivement suivant une vue isométrique et une vue de côté. Dans cet exemple, la colonne 3 comprend un ensemble de premiers moyens 31, un ensemble de deuxièmes moyens 32 et un ensemble de troisièmes moyens 33. Chaque ensemble de moyens 31, 32, 33 comprend quatre moyens qui peuvent être des courroies sans fin prises entre une poulie P supérieure et une poulie inférieure (non montrée). Les courroies 31 peuvent déplacer verticalement un premier chariot 4A, par exemple en monté comme montré par la Figure 6. Les courroies 32 et 33 peuvent déplacer respectivement un deuxième chariot 4B et un troisième chariot 4C.

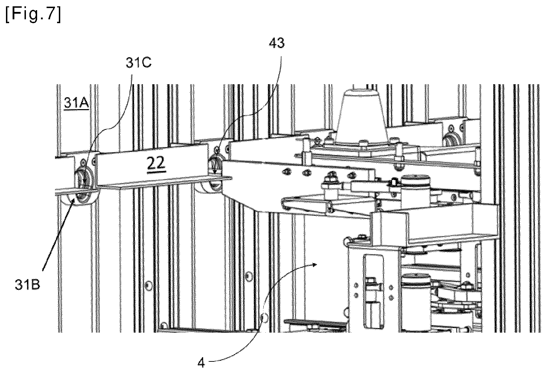

Chacun des moyens des figures 5 et 6 peut comprendre une courroie 31A et une pièce d'accrochage 31B comme cela est montré en figure 7.

Avantageusement, une courroie peut comprendre une pluralité de moyens d'accrochage (31B) solidaires de la courroie (31A) et distancés d'un pas correspondant à un multiple d'une distance verticale entre deux niveaux de stockage (2).

La pièce d'accrochage 31B peut être solidaire de la courroie 31A ou incorporée dans celles-ci. Dans cet exemple, la pièce d'accrochage comprend un logement 31C pouvant recevoir un moyen d'accrochage du chariot 4, qui peut être une broche 43 mobile entre une position reculée, non montrée, et une position avancée comme cela se voit sur la figure 7.

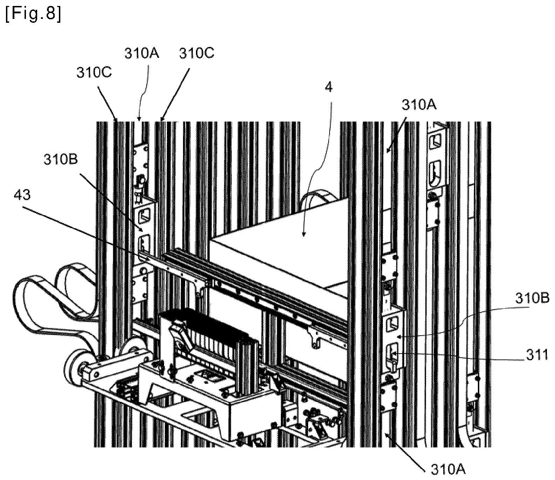

La figure 8 présente une variante dans laquelle les premiers moyens d'élévation 310 comprennent deux portions de courroie 310A reliées par une pièce d'accrochage 310B.

Avantageusement, dans cet exemple, la pièce d'accrochage 310B est agencée entre deux montants 310C de guidage le long desquels elle coulisse en montée et en descente.

Dans cet exemple également, la pièce d'accrochage comprend un logement 311 pouvant recevoir un moyen d'accrochage du chariot 4, sous forme d'une broche 43 mobile entre une position reculée, non montrée, et une position avancée comme cela se voit sur la figure 8.

Les moyens d'accrochages présentés en référence aux dessins décrits ci-dessus ne représentent que des exemples non limitatifs de l'invention. Des moyens d'accrochage différents peuvent être envisagés par l'homme du métier sans sortir de l'invention, que ce soit du côté du chariot, comme du côté des moyens d'élévation.

Par exemple, au lieu des broches mobiles, les moyens d'accrochage du chariot peuvent avoir une forme de pince venant se serrer et s'accrocher à une courroie dentée.

Par ailleurs, l'orientation des courroies peut être différente, par exemple tournée de 90° par rapport aux exemples montrés par les figures.

## Revendications

1. Système de stockage automatisé d'articles comprenant :
- une pluralité de chariots (4) automatiquement guidés aptes chacun à transporter un article (A), et
- un rayonnage (1 ; 10) comprenant une pluralité de niveaux de stockage (2 ; 20) superposés comprenant chacun une allée dans laquelle peuvent circuler des chariots automatiquement guidés (4) et une colonne (3 ; 30) de déplacement vertical reliant les niveaux de stockage (2 ; 20) et permettant un déplacement de chariots (4) automatiquement guidés le long de cette colonne entre un niveau d'entrée/sortie d'articles (A) et un des niveaux de stockage (2 ; 20), ou entre deux niveaux de stockage (2 ; 20),
ladite colonne (3 ; 30) de déplacement vertical comprenant :
- des premiers moyens d'élévation (31, 32, 33 ; 310, 320, 330) mobiles configurés pour déplacer verticalement un premier chariot (4, 4A, 4B, 4C) automatiquement guidé, et
- des deuxièmes moyens d'élévation (31, 32, 33 ; 310, 320, 330) mobiles, adjacents des premiers moyens d'élévation (31, 32, 33 ; 310, 320, 330), configurés pour déplacer verticalement un deuxième chariot (4, 4A, 4B, 4C) automatiquement guidé, indépendamment du déplacement du premier chariot automatiquement guidé (4, 4A, 4B, 4C),
le système de stockage automatisé d'articles étant **caractérisé en ce qu'**un chariot (4, 4A, 4B, 4C) automatiquement guidé comprend des premiers moyens d'accrochage (43) ; et
les premiers moyens d'élévation (31, 32, 33 ; 310, 320, 330) et/ou les deuxièmes moyens d'élévation (31, 32, 33 ; 310, 320, 330) comprennent des deuxièmes moyens d'accrochage (31B ; 310B) configurés pour coopérer avec les premiers moyens d'accrochage (43) de manière à réaliser l'accrochage pour l'élévation ou la descente et le défaire ensuite pour libérer le chariot (4, 4A, 4B, 4C).

2. Système de stockage automatisé d'articles selon la revendication 1, dans lequel lesdits premiers moyens d'élévation (31, 32, 33 ; 310, 320, 330) et deuxièmes moyens d'élévation (31, 32, 33 ; 310, 320, 330) sont agencés dans la colonne de sorte que chaque premier moyen d'élévation (31, 32, 33 ; 310, 320, 330) soit adjacent d'un deuxième moyen d'élévation (31, 32, 33 ; 310, 320, 330) respectif.

3. Système de stockage automatisé d'articles selon l'une des revendications 1 ou 2, dans lequel les premiers moyens d'élévation (31, 32, 33 ; 310, 320, 330) et/ou les deuxièmes moyens d'élévation (31, 32, 33 ; 310, 320, 330) comprennent des chaînes, des câbles ou des courroies (31A ; 310A) portant les deuxièmes moyens d'accrochage.

4. Système de stockage automatisé d'articles selon la revendication 1 à 3 dans lequel les premiers moyens d'élévation (31, 32, 33 ; 310, 320, 330) et/ou les deuxièmes moyens d'élévation (31, 32, 33 ; 310, 320, 330) comprenant des courroies (31A ; 310A) :
- les premiers moyens d'accrochage (43) comprennent des broches mobiles chacune entre une position reculée et une position avancée,
- les deuxièmes moyens d'accrochage (31B ; 310B) étant solidaires des courroies (31A ; 310A) ou incorporés dans celles-ci, comprennent des logements agencés chacun pour recevoir une broche mobile, lorsqu'elle est en position avancée.

5. Système de stockage automatisé d'articles selon la revendication 4, dans lequel un premier moyen d'élévation (31, 32, 33) et/ou un deuxième moyen d'élévation (31, 32, 33) comprend :
- une courroie sans fin (31A) agencée entre deux poulies (P), et
- une pluralité de deuxièmes moyens d'accrochage (31B) solidaires de la courroie (31A).

6. Système de stockage automatisé d'articles selon la revendication 4, dans lequel un premier moyen d'élévation (310, 320, 330) et/ou un deuxième moyen d'élévation (310, 320, 330) comprend deux portions de courroie (310A) reliées par une pièce d'accrochage (310B) comprenant un logement (311).

7. Système de stockage automatisé d'articles selon la revendication précédente, dans lequel ladite pièce d'accrochage (310B) est agencée entre deux montants (310C) de guidage le long desquels elle coulisse en montée et en descente.

8. Système de stockage automatisé d'articles selon l'une des revendications précédentes, dans lequel la colonne (3) de déplacement vertical est agencée dans un puits reliant des niveaux (2) de stockage du rayonnage (1).

9. Système de stockage automatisé d'articles selon l'une des revendications 1 à 7, dans lequel la colonne de déplacement vertical est agencée entre deux portions (101) parallèles du rayonnage (10).

## Patentansprüche

1. Automatisiertes Artikellagersystem, umfassend:
- eine Vielzahl von automatisch geführten Wagen (4), die jeweils zum Transport eines Artikels (A) geeignet sind, und
- ein Regal (1; 10), das eine Vielzahl von übereinander angeordneten Lagerebenen (2; 20) umfasst, die jeweils einen Gang umfassen, in dem automatisch geführte Wagen (4) verkehren können, und eine Säule (3; 30) für vertikale Bewegung, die die Lagerebenen (2; 20) miteinander verbindet und eine Bewegung von automatisch geführten Wagen (4) entlang dieser Säule zwischen einer Ein-/Ausgangsebene für Artikel (A) und einer der Lagerebenen (2; 20) oder zwischen zwei Lagerebenen (2; 20) ermöglicht,
die Säule (3; 30) für die vertikale Verschiebung umfassend:
- erste Hebevorrichtungen (31, 32, 33; 310, 320, 330), die beweglich konfiguriert sind, um einen ersten automatisch geführten Wagen (4, 4A, 4B, 4C) vertikal zu bewegen, und
- zweite Hebevorrichtungen (31, 32, 33; 310, 320, 330), die beweglich und benachbart zu den ersten Hebevorrichtungen (31, 32, 33; 310, 320, 330) sind, die konfiguriert sind, um einen zweiten automatisch geführten Wagen (4, 4A, 4B, 4C) vertikal zu bewegen, unabhängig von der Bewegung des ersten automatisch geführten Wagens (4, 4A, 4B, 4C),
das automatisierte Artikellagerungssystem, **gekennzeichnet durch** einen automatisch geführten Wagen (4, 4A, 4B, 4C), der erste Einhängemittel (43) umfasst; und
die ersten Hebevorrichtungen (31, 32, 33; 310, 320, 330) und/oder die zweiten Hebevorrichtungen (31, 32, 33; 310, 320, 330) zweite Einhängemittel (31B; 310B) umfassen, die konfiguriert sind, um mit den ersten Einhängemitteln (43) zusammenzuwirken, um die Einhängung für das Heben oder Senken zu bewerkstelligen und diese anschließend zu lösen, um den Wagen (4, 4A, 4B, 4C) wieder freizugeben.

2. Automatisiertes Artikellagersystem nach Anspruch 1, wobei die ersten Hebevorrichtungen (31, 32, 33; 310, 320, 330) und zweiten Hebevorrichtungen (31, 32, 33; 310, 320, 330) in der Säule derart angeordnet sind, dass jede erste Hebevorrichtung (31, 32, 33; 310, 320, 330) zu einer jeweiligen zweiten Hebevorrichtung (31, 32, 33; 310, 320, 330) benachbart ist.

3. Automatisiertes Artikellagersystem nach einem der Ansprüche 1 oder 2, wobei die ersten Hebevorrichtungen (31, 32, 33; 310, 320, 330) und/oder die zweiten Hebevorrichtungen (31, 32, 33; 310, 320, 330) Ketten, Seile oder Riemen (31A; 310A) umfassen, die die zweiten Befestigungsmittel tragen.

4. Automatisiertes Artikellagersystem nach Anspruch 1 bis 3, wobei die ersten Hebevorrichtungen (31, 32, 33; 310, 320, 330) und/oder die zweiten Hebevorrichtungen (31, 32, 33; 310, 320, 330) Riemen (31A; 310A) umfassen:
- die ersten Einhängemittel (43) bewegliche Stifte umfassen, die jeweils zwischen einer zurückgezogenen Stellung und einer vorgeschobenen Stellung beweglich sind,
- die zweiten Einhängemittel (31B; 310B), die mit den Riemen (31A; 310A) fest verbunden oder in diese eingearbeitet sind, Aufnahmen umfassen, die jeweils zur Aufnahme eines beweglichen Stiftes angeordnet sind, wenn dieser sich in vorgeschobener Stellung befindet.

5. Automatisiertes Artikellagersystem nach Anspruch 4, wobei eine erste Hebevorrichtung (31, 32, 33) und/oder eine zweite Hebevorrichtung (31, 32, 33) Folgendes umfasst:
- einen Endlosriemen (31A), der zwischen zwei Riemenscheiben (P) angeordnet ist, und
- eine Vielzahl von zweiten Einhängemitteln (31B), die mit dem Riemen (31A) verbunden sind.

6. Automatisiertes Artikellagersystem nach Anspruch 4, wobei eine erste Hebevorrichtung (310, 320, 330) und/oder eine zweite Hebevorrichtung (310, 320, 330) zwei Riemenabschnitte (310A) umfasst, die durch ein Einhängestück (310B) verbunden sind, das eine Aufnahme (311) umfasst.

7. Automatisiertes Artikellagersystem nach dem vorstehenden Anspruch, wobei das Einhängestück (310B) zwischen zwei Führungsständern (310C) angeordnet ist, entlang denen es beim Auf- und Absteigen gleitet.

8. Automatisiertes Artikellagersystem nach einem der vorstehenden Ansprüche, wobei die Säule (3) für vertikale Bewegung in einem Schacht angeordnet ist, der Lagerebenen (2) des Regals (1) miteinander verbindet.

9. Automatisiertes Artikellagersystem nach einem der Ansprüche 1 bis 7, wobei die Säule für die vertikale Verschiebung zwischen zwei parallelen Abschnitten (101) des Regals (10) angeordnet ist.

## Claims

1. Automated article storage system comprising:
- a plurality of automatically guided carts (4) each suitable for transporting an article (A), and
- a rack (1; 10) comprising a plurality of superimposed storage levels (2; 20), each comprising an aisle in which automatically guided carts (4) can travel, and a vertical movement column (3; 30) connecting the storage levels (2; 20) and allowing automatically guided carts (4) to move along this column between an article (A) input/output level and one of the storage levels (2; 20), or between two storage levels (2; 20),
said vertical movement column (3; 30) comprising:
- first movable lifting means (31, 32, 33; 310, 320, 330) configured to vertically move a first automatically guided cart (4, 4A, 4B, 4C), and
- second movable lifting means (31, 32, 33; 310, 320, 330), adjacent to the first lifting means (31, 32, 33; 310, 320, 330), configured to vertically move a second automatically guided cart (4, 4A, 4B, 4C), independently of the movement of the first automatically guided cart (4, 4A, 4B, 4C),
the automated article storage system being **characterized in that** an automatically guided cart (4, 4A, 4B, 4C) comprises first hooking means (43); and
the first lifting means (31, 32, 33; 310, 320, 330) and/or the second lifting means (31, 32, 33; 310, 320, 330) comprise second hooking means (31B; 310B) configured to engage with the first hooking means (43) so as to perform hooking for lifting or lowering and then undo it to release the cart (4, 4A, 4B, 4C).

2. Automated article storage system according to claim 1, wherein said first lifting means (31, 32, 33; 310, 320, 330) and second lifting means (31, 32, 33; 310, 320, 330) are arranged in the column so that each first lifting means (31, 32, 33; 310, 320, 330) is adjacent to a particular second lifting means (31, 32, 33; 310, 320, 330).

3. Automated article storage system according to either claim 1 or claim 2, wherein the first lifting means (31, 32, 33; 310, 320, 330) and/or the second lifting means (31, 32, 33; 310, 320, 330) comprise chains, cables or belts (31A; 310A) carrying the second hooking means.

4. Automated article storage system according to claim 1 to 3 wherein the first lifting means (31, 32, 33; 310, 320, 330) and/or the second lifting means (31, 32, 33; 310, 320, 330) comprise belts (31A; 310A):
- the first hooking means (43) comprise spindles each movable between a backward position and a forward position,
- the second hooking means (31B; 310B) are rigidly connected to the belts (31A; 310A) or are incorporated therein, and comprise housings each arranged to receive a movable spindle when it is in the forward position.

5. Automated article storage system according to claim 4, wherein a first lifting means (31, 32, 33) and/or a second lifting means (31, 32, 33) comprises:
- an endless belt (31A) arranged between two pulleys (P), and
- a plurality of second hooking means (31B) rigidly connected to the belt (31A).

6. Automated article storage system according to claim 4, wherein a first lifting means (310, 320, 330) and/or a second lifting means (310, 320, 330) comprises two belt portions (310A) connected by a hooking piece (310B) comprising a housing (311).

7. Automated article storage system according to the preceding claim, wherein said hooking piece (310B) is arranged between two guide uprights (310C) along which it slides up and down.

8. Automated article storage system according to any of the preceding claims, wherein the vertical movement column (3) is arranged in a shaft connecting storage levels (2) of the rack (1).

9. Automated article storage system according to any of claims 1 to 7, wherein the vertical movement column is arranged between two parallel portions (101) of the rack (10).
